# EUROPÄISCHE PATENTSCHRIFT

(11) **EP 3 038 728 B1**
(45) Veröffentlichungstag und Bekanntmachung des Hinweises auf die Patenterteilung: **20.01.2021**
(21) Anmeldenummer: 14735861.8
(22) Anmeldetag: 05.07.2014
(51) Int. Cl.: B01D 35/027, B01D 35/06, B01D 29/23, B01D 29/90

(54) **FILTERVORRICHTUNG FÜR FLUIDE**
FILTER DEVICE FOR FLUIDS
DISPOSITIF DE FILTRAGE POUR FLUIDES

(30) Priorität: 30.08.2013 DE 102013014453
(43) Veröffentlichungstag der Anmeldung: 06.07.2016
(73) Patentinhaber: RT-Filtertechnik Gmbh, 88048 Friedrichshafen (DE)
(72) Erfinder: BAUTZ, Marco, 88045 Friedrichshafen (DE); STEHLE, Gerhard, 78467 Konstanz (DE)
(74) Vertreter: Bartels und Partner, Patentanwälte
(86) Internationale Anmeldenummer: PCT/EP2014/001852
(87) Internationale Veröffentlichungsnummer: WO 2015/014432

(56) Entgegenhaltungen:
- EP-A1- 1 872 842
- GB-A- 562 175
- US-A- 3 353 678
- US-A- 4 657 671

## Beschreibung

Die Erfindung betrifft eine Filtervorrichtung für Fluide, insbesondere in Form eines Tankeinbau-Rücklauffilters, mit den Merkmalen im Oberbegriff von Anspruch 1.

Derartige Filtervorrichtungen sind in einer Vielzahl von Bau- und Ausführungsformen Stand der Technik und auf dem Markt erhältlich. Sie dienen dabei unter anderem dazu, Verschmutzungen in Fluiden, wie Hydrauliköl, aus diesen heraus zu filtrieren. Verschmutzungen des Hydrauliköls erfolgen bei der Montage und bei der Inbetriebnahme der jeweiligen Hydraulikanlage, und neben dieser Anfangsverschmutzung kann es zu Verschmutzungen während des Betriebes kommen, beispielsweise durch Eindringen von Schmutz am Hydrauliktank aufgrund unzureichender Tankbelüftung, Rohrdurchführungen, Kolbenstangenabdichtungen und dergleichen mehr. Insbesondere bei Hydraulikanlagen von Arbeitsmaschinen, wie Erdbewegungsmaschinen, Baggern oder dergleichen, kann es zweckmäßig sein, die Filtration rücklaufenden Fluids unmittelbar im Bereich des Hydrauliktanks zu veranlassen, beispielsweise indem man die Filtervorrichtung als Rücklauffilter direkt in den Tank einbaut. Das Dokument DE 10 2004 014 149 B4 offenbart ein Beispiel eines derartigen Tankeinbaufilters.

Die US 4 657 671 beschreibt eine Filtervorrichtung für Fluide, insbesondere in Form eines Tankeinbau-Rücklauffilters, mit zumindest einem Filterelement, das in einem Gehäuse aufnehmbar ist, das einen Fluideingang für die Zufuhr von Unfiltrat zu einem inneren Hohlraum des jeweiligen Filterelements aufweist, der von einem vom Unfiltrat durchströmbaren Filtermedium umgeben ist, wobei zwischen dem Fluideingang und dem inneren Hohlraum des jeweiligen Filterelements eine die Strömung des zum Filtermedium gelangenden Unfiltrats ausrichtende Strömungsleiteinrichtung vorgesehen ist.

Die US 3 353 678 zeigt ein Filterelement zur Verwendung bei einer solchen Filtervorrichtung auf, die eine Endkappe mit einem zum inneren Filterhohlraum des Filterelements führende Öffnung aufweist, wobei an der Öffnung ein Strömungsleitkörper mit anströmbaren, eine Rotation der Strömung bewirkenden Leitschaufeln vorgesehen ist.

Die EP 1 872 842 A1 beschreibt eine Filtervorrichtung für Fluide, insbesondere in Form eines Tankeinbau-Rücklauffilters, mit den Merkmalen im Oberbegriff von Anspruch 1 mit zumindest einem Filterelement, das in einem Gehäuse aufnehmbar ist, das einen Fluideingang für die Zufuhr von Unfiltrat zu einem inneren Hohlraum des jeweiligen Filterelements aufweist, der von einem vom Unfiltrat durchströmbaren Filtermedium umgeben ist, das einen zylindrischen Hohlraum umgrenzt, wobei zwischen dem Fluideingang und dem inneren Hohlraum des jeweiligen Filterelements eine die Strömung des zum Filtermedium gelangenden Unfiltrats ausrichtende Strömungsleiteinrichtung vorgesehen ist, die Führungsmittel zur Erzeugung einer Drallströmung aufweist, die im Hohlraum um die Zylinderachse rotiert, wobei die Strömungsleiteinrichtung stromaufwärts der drallerzeugenden Führungsmittel eine Einströmkammer aufweist, in die das Unfiltrat mit von einer Anschlusseinrichtung vorgegebener Einströmrichtung eintritt und aus der das Unfiltrat mit gegenüber der Einströmrichtung veränderter Strömungsrichtung zu den drallerzeugenden Führungsmitteln gelangt.

Eine Filtervorrichtung mit einer Magnetkerze wird in der GB 562 175 aufgezeigt.

Ausgehend von diesem Stand der Technik stellt sich die Erfindung die Aufgaben, eine Filtervorrichtung der eingangs genannten Gattung zur Verfügung zu stellen, die sich durch ein besonders günstiges Betriebsverhalten auszeichnet.

Gemäß der Erfindung ist diese Aufgabe durch eine Filtervorrichtung gelöst, die die Merkmale des Patentanspruchs 1 in seiner Gesamtheit aufweist.

Demgemäß besteht eine wesentliche Besonderheit der Erfindung darin, dass sich innerhalb des Hohlraumes des Filter¬elements eine Magnetkerze oder Sensoren befinden.

Es ist weiter vorgesehen, dass die Strömungsleiteinrichtung stromaufwärts der drallerzeugenden Führungsmittel eine Einströmkammer aufweist, in die das Unfiltrat mit von einer Anschlusseinrichtung vorgegebener Einströmrichtung eintritt und aus der das Unfiltrat mit gegenüber der Einströmrichtung veränderter Strömungsrichtung zu den drallerzeugenden Führungsmitteln gelangt. Die in der Einströmkammer erfolgende Umlenkung des einströmenden Fluidstroms führt zu einer Strömungsberuhigung, bevor das Unfiltrat zu den drallerzeugenden Führungsmitteln gelangt.

Ferner ist vorgesehen, dass zwischen dem Fluideingang, über den das Unfiltrat in die Filtervorrichtung einströmt, und dem inneren Hohlraum des jeweiligen Filterelements eine Strömungsleiteinrichtung vorgesehen ist, die die Strömung des zum Filtermedium gelangenden Unfiltrats ausrichtet. Durch eine gezielte Beeinflussung der Strömungsrichtung ist eine gleichmäßigere Druck- und Strömungsverteilung innerhalb des Filterelements erreichbar. Außerdem lässt sich eine möglichst lange Verweilzeit des Fluids innerhalb des Hohlraumes des Filterelements und entlang von im Filterhohlraum befindlichen Zusatzelementen erreichen, d.h. entlang der Magnetkerze oder den Sensoren. Bei gefaltetem Filtermedium werden die Filterfalten bei Ausrichtung des Fluids nur noch weitestgehend einseitig belastet, wodurch die Leistungsfähigkeit des Filterelements gesteigert werden kann.

Bei Ausführungsbeispielen, bei denen das Filtermedium des jeweiligen Filterelements einen zylindrischen Hohlraum umgrenzt, weist die Strömungsleiteinrichtung in besonders vorteilhafter Weise Führungsmittel zur Erzeugung einer Drallströmung auf, die im Hohlraum um die Zylinderachse rotiert. Dadurch lässt sich eine besonders lange Verweilzeit entlang von Magnetkerzen und dadurch eine effiziente Absonderung von ferromagnetischen Partikeln aus dem Fluid erreichen.

In besonders vorteilhafter Weise können die drallerzeugenden Führungsmittel als eine Funktionsstufe einen in der Einströmkammer befindlichen, den Strömungsweg von dieser zu einer Öffnung der zugeordneten Endkappe des betreffenden Filterelements bildenden Führungskörper aufweisen, in den das Unfiltrat aus der Einströmkammer über eine von der Anschlusseinrichtung abgewandte Öffnung einströmbar ist und die innere Leitflächen aufweist, die zur Drallerzeugung spiralig zur Achse verlaufen. Dadurch wird bereits innerhalb des Bereichs der Einströmkammer und noch bevor das Fluid über die Endkappe des Filterelements in dessen Filterhohlraum gelangt, eine um die Achse rotierende Drallströmung erzeugt.

Um eine besonders effektive Rotation zu erreichen, kann die Anordnung mit besonderem Vorteil so getroffen sein, dass die drallerzeugenden Führungsmittel als weitere Funktionsstufe leitschaufelartige Drallelemente aufweisen, die sich an der zum Filterhohlraum führenden Öffnung der Endkappe befinden. Die Rotation der Strömung wird daher unmittelbar am Elementeingang weiter verstärkt.

Bei der Benutzung als Tankeinbaufilter kann die Einströmkammer vorteilhafterweise an der Oberseite eines beim Filtervorgang die Reinseite bildenden Fluidtanks angeordnet sein, einen durch einen Tankwandabschnitt gebildeten Boden, in dem eine Einbauöffnung für das in den Tank ragende Filtergehäuse vorhanden ist, sowie einen der Einbauöffnung gegenüberliegenden, abnehmbaren Gehäusedeckel aufweisen. Der Gehäusedeckel bildet dadurch nicht nur einen Verschluss der Einströmkammer, sondern hat auch die Funktion der Wartungs- und Serviceöffnung für den Einbau und den Ausbau des Filterelements beim Filterelementwechsel.

Der die spiralig verlaufenden Leitflächen aufweisende Führungskörper, der die erste Funktionsstufe der drallerzeugenden Mittel bildet, kann sich in vorteilhafter Weise von der Unterseite des Gehäusedeckels bis zur Anlage an der Endkappe des in Funktionsposition befindlichen Filterelements erstrecken. Der Führungskörper bildet dadurch nicht nur die Fluidführung, sondern kann auch als Halteelement dienen, das das Filterelement im Filtergehäuse in Funktionsposition hält.

In vorteilhafter Weise kann der Führungskörper am Gehäusedeckel angebracht sein und einen koaxialen Durchgang aufweisen, durch den sich ein am Gehäusedeckel festgelegter Träger einer Magnetkerze in den inneren Hohlraum des betreffenden Filterelements erstreckt. Bei einem Elementwechsel wird so durch Abnehmen des Deckels und die Mitnahme des Führungskörpers nicht nur das Filterelement frei zugänglich, sondern es werden auch die Magnetkerze und gegebenenfalls an dieser angeordnete Sensoren mit herausgenommen, so dass diese Komponenten für die Auswertung zur Verfügung stehen.

Das Filtergehäuse kann in vorteilhafter Weise mit einem Befestigungsflansch an der im Boden der Einströmkammer gebildeten Einbauöffnung unter Bildung einer Abdichtung festgelegt sein, die die schmutzseitige Einströmkammer vom reinseitigen Tank trennt. Dabei kann das Filtergehäuse einen sich von seinem Befestigungsflansch durch die Einströmkammer zum Gehäusedeckel erstreckenden Wandabschnitt aufweisen, der eine Prallwand bildet, die der an der Kammerwand befindlichen Anschlusseinrichtung für das Unfiltrat gegenüberliegend angeordnet ist. Dadurch bildet die durch den in die Einströmkammer ragenden Wandabschnitt des Filtergehäuses gebildete Prallwand eine Stromumlenkeinrichtung, die in der Einströmkammer zur Strömungsberuhigung vorgesehen ist.

Nachstehend ist die Erfindung anhand eines in der Zeichnung dargestellten Ausführungsbeispiels im Einzelnen erläutert. Es zeigen:
- Fig. 1: einen Längsschnitt eines Ausführungsbeispiels der Filtervorrichtung, eingebaut in einen aufgeschnitten dargestellten Fluidtank;

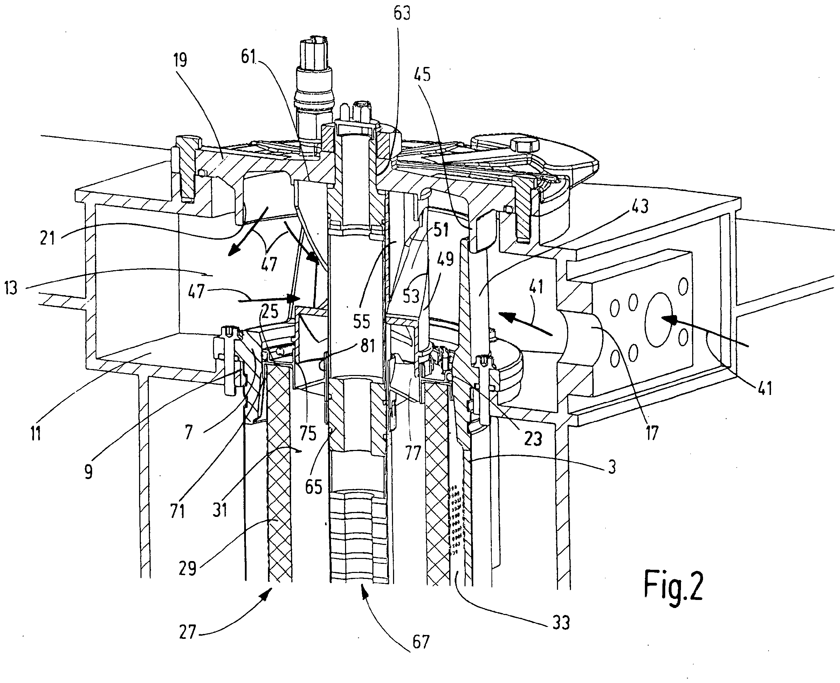

- Fig. 2: einen Teillängsschnitt, in dem der obere Teil der Fig. 1 in größerem Maßstab dargestellt ist;

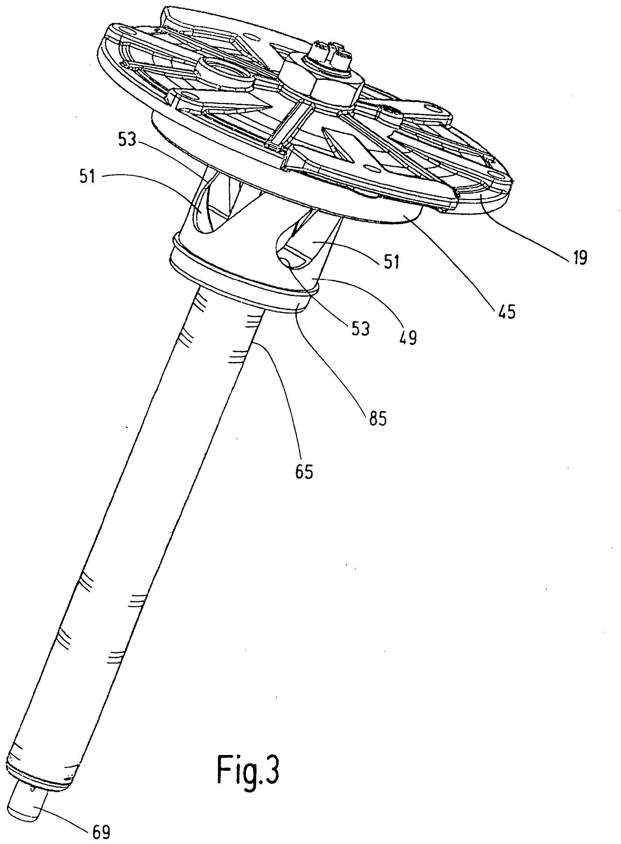

- Fig. 3: eine perspektivische Schrägansicht des Gehäusedeckels des Ausführungsbeispiels, mit einem daran befindlichen Führungskörper der Strömungsleiteinrichtung und einer Magnetkerze;
- Fig. 4: eine gegenüber Fig. 2 und 3 in größerem Maßstab gezeichnete, perspektivische Schrägansicht des Führungskörpers; und
- Fig. 5: eine perspektivische Schrägansicht, die von einem zur Verwendung bei der Filtervorrichtung vorgesehenen Filterelement lediglich eine Endkappe sowie der Endkappe zugeordnete Komponenten zeigt.

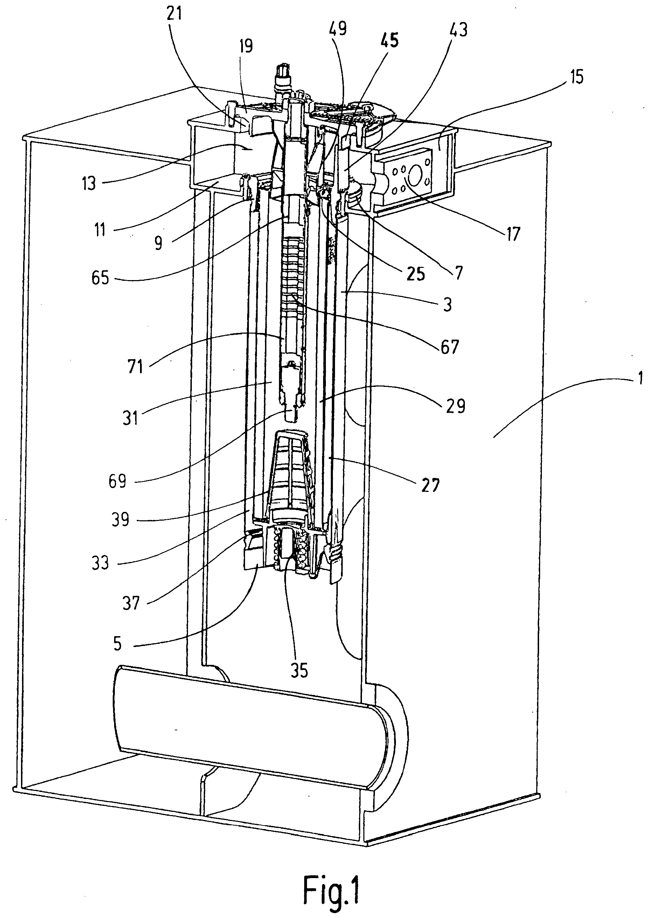

Die Fig. 1 zeigt einen ein Fluid wie Hydrauliköl bevorratenden Tank 1 mit einem darin eingebauten Ausführungsbeispiel der Filtervorrichtung in Form eines Tankeinbau-Rücklauffilters. Die Filtervorrichtung weist ein hohlzylinderartiges Filtergehäuse 3 auf, das an seinem unteren Ende 5 zum Tankinhalt hin offen ist. Dieses offene Ende 5 bildet den reinseitigen Ausgang, durch den das abgereinigte Fluid aus dem Filtergehäuse 3 zum Tankinhalt gelangt. Am oberen Ende des Filtergehäuses 3 weist dieses einen Befestigungsflansch 7 auf, mit dem es an einer Einbau-öffnung 9 durch Verschrauben befestigt ist. Die Einbauöffnung 9 befindet sich in einem oberen Tankwandabschnitt in Form eines ebenen Bodens 11 einer Einströmkammer 13, die leicht vertieft an der Oberseite des Tanks 1 vorgesehen ist. Die Einströmkammer 13 hat die Form eines rechteckförmigen Kastens. An einer Schmalseite 15 des Kastens befindet sich eine Anschlusseinrichtung 17, über die Unfiltrat in die Kammer 13 mit einer Einströmrichtung einströmbar ist, die parallel zum Boden 11 und zu den Langseiten der Kammer 13 verläuft. Hierfür sind in der Anschlusseinrichtung 17 mehrere parallel zueinander verlaufende Einströmkanäle vorgesehen, von denen die in Blickrichtung auf die Fig. 1 gesehen vorderste Kanalöffnung geschnitten dargestellt ist. An der Oberseite ist die Einströmkammer 13 durch einen abnehmbaren Gehäusedeckel 19 verschließbar, der zur Längsachse des Filtergehäuses 3 koaxial ist und eine Gehäuseöffnung 21 verschließt, die im Durchmesser größer ist als die Einbauöffnung 9 im Boden 11.

Der Befestigungsflansch 7 des Filtergehäuses 3 bildet an seiner Innenseite eine Sitzfläche 23 für die abgedichtete Anlage der zugeordneten Endkappe 25 eines Filterelements 27, wobei die Endkappe 25, wie üblich, eine Einfassung für das zugewandte Ende eines hohlzylinderförmigen Filtermediums 29 bildet, das einen inneren Filterhohlraum 31 umgibt, der beim Filtervorgang die Schmutzseite bildet. Dementsprechend bildet der Raum 33 zwischen der Außenseite des Filtermediums 29 und der Innenwand des Filtergehäuses 3 die Reinseite, aus der das gefilterte Fluid über das untere, offene Ende 5 aus dem Filtergehäuse 3 austritt und zum Tankinhalt gelangt. Wie ebenfalls üblich, ist der schmutzseitige Hohlraum 31 des Filterelements 27 gegen übermäßigen Druckaufbau mittels eines Bypassventils 35 (Fig. 1) abgesichert, das sich an der unteren Endkappe 37 des Filterelements 27 befindet, wobei an dieser Öffnung ein in den Filterhohlraum 31 ragender Schmutzauffangkorb 39 vorgesehen ist.

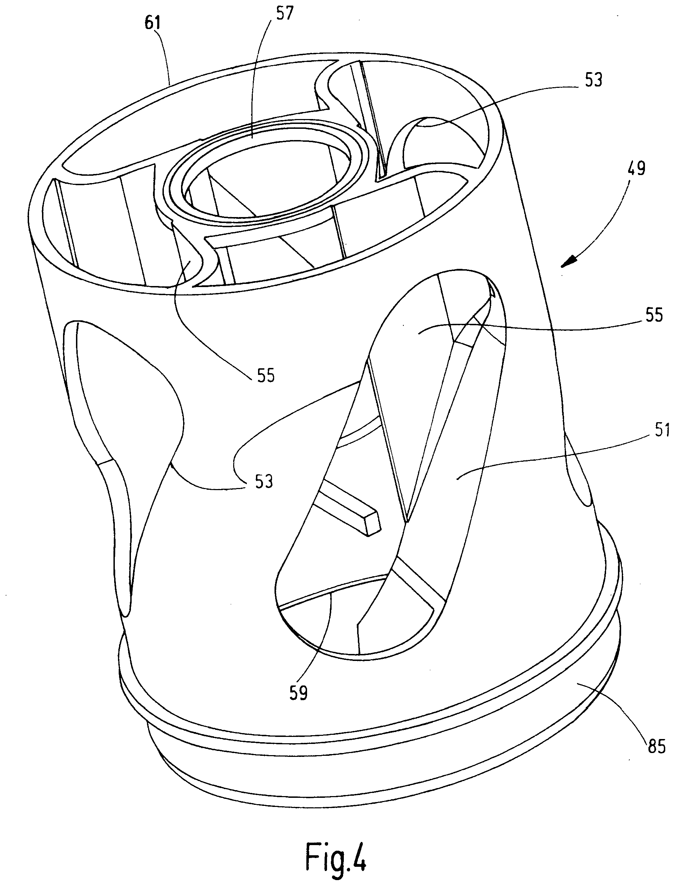

Als wesentlicher Bestandteil Strömungsleiteinrichtung bildet die Einströmkammer 13 einen Raum, der die über die Anschlusseinrichtung 17 eintretende Unfiltratströmung, deren Einströmrichtung mit Strömungspfeilen 41 angedeutet ist, beruhigt und ausrichtet. Hierfür weist die Einströmkammer 13 als Leitelement einen Wandabschnitt 43 auf, der sich vom Befestigungsflansch 7 des Filtergehäuses 3 ausgehend in Form eines Kreisflächenabschnittes durch die Einströmkammer 13 bis zu einem an der Innenseite des Gehäusedeckels 19 befindlichen Ringkörper 45 erstreckt. Der eine Prallwand bildende Wandabschnitt 43 erstreckt sich über eine derartige Bogenlänge, dass er entlang der Langseiten der Einströmkammer 13 seitlich umströmbar ist. Dadurch setzt sich der Strömungsweg des Unfiltrats mit geänderter, durch Pfeile 47 angedeuteter Strömungsrichtung auf dem Weg zum inneren Hohlraum 31 des Filterelements 27 fort. Auf diesem weiteren Fluidweg weist die Filtervorrichtung drallerzeugende Führungsmittel in zwei Funktionsstufen auf. Die erste Funktionsstufe ist durch einen Führungskörper 49 gebildet, der in Fig. 4 gesondert dargestellt ist. Wie aus dieser Figur deutlich erkennbar ist, weist der Führungskörper 49 innerhalb eines Hohlzylinders Leitflächen 51 auf, die einen, bezogen auf die Längsachse, spiraligen Verlauf besitzen, so dass bei einer axialen Durchströmung ein Drall erzeugt wird, so dass die Strömung um die Längsachse rotiert. Für den Fluideintritt zu den Leitflächen 51 sind in der Wand des Führungskörpers 49 schräg zur Achse verlaufende Eintrittsfenster 53 gebildet. Radial innenliegend sind die Leitflächen 51 durch sich axial erstreckende Wandteile 55 begrenzt, die am oberen und unteren Ende an einen Innenring 57 bzw. 59 angrenzen, die einen zentralen Durchgang durch den Führungskörper 49 begrenzen. Mit dem in den Figuren obenliegenden Rand 61 ist der Führungskörper 49 an der Unterseite des Gehäusedeckels 19 angebracht. In einer zentralen Bohrung 63 des Gehäusedeckels 19 ist außerdem ein Ende des Trägers 65 einer Magnetkerze angebracht, der in der bei Magnetkerzen üblichen Weise eine Gruppe von Permanentmagneten 67 aufweist und sich bei angebrachtem Gehäusedeckel 19 in den Filterhohlraum 31 hinein bis in die Nähe des Schmutzauffangkorbs 39 erstreckt. Dabei durchgreift der Träger 65 den inneren Durchgang des Führungskörpers 49 und die Öffnung 75 der Endkappe 25. Ein Sensor 69 am unteren Ende der Magnetkerze ermöglicht eine Überwachung der Qualität des Hydrauliköls. Die Menge an von den Magneten 67 angesammelten ferritischen Partikeln kann mittels eines Sensors 71 indiziert werden. Weiterhin kann ein RFID-Sensor 73 an der Innenseite der Endkappe 37 vorgesehen sein, der eine Erkennung des Filterelements 27 liefert.

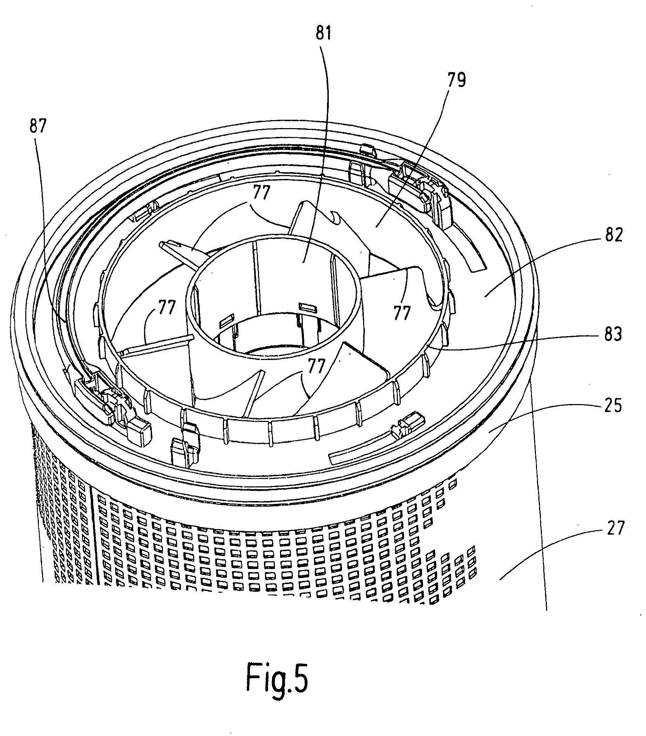

Als zweite Stufe der drallerzeugenden Führungsmittel ist an der zum Filterhohlraum 31 führenden Öffnung 75 der Endkappe 25 eine weitere drallerzeugende Einrichtung vorgesehen, die Leitschaufeln 77 aufweist, die in der Art von Turbinenschaufeln in einem Ringkanal 79 angeordnet sind. Innenseitig ist der Kanal 79 von einem Stutzen 81 der Endkappe 25 begrenzt, der bei der Funktionsposition von dem Träger 65 der Magnetkerze durchgriffen ist. An der Oberseite der Endkappe 25 befindet sich eine den Kanal 79 umgebende Anschlussplatte 82 (Fig. 5), die einen den Kanal 79 umgebenden, vorstehenden Ring 83 aufweist. Bei der Funktionsposition liegt der Endabschnitt 85 des Führungskörpers 49 an der Innenseite des vorstehenden Ringes 83 an, so dass der Strömungsweg vom Führungskörper 49 über den Kanal 79 mit den Leitschaufeln 77 zum Filterhohlraum 31 fortgesetzt ist. Durch die Leitschaufeln 77 wird der Drall der Strömung, den die spiraligen Leitflächen 51 des Führungskörpers 49 erzeugen, am Eingang des Filterhohlraums 31 weiter verstärkt, so dass eine starke Rotation um die Längsachse innerhalb des Filterhohlraums 31 stattfindet. Insbesondere sind hierfür mehr gezeigte Leitschaufeln (6 Stück) an der Endkappe 25 des Filterelementes vorhanden, denn Leitschaufeln (4 Stück) am Führungskörper 49. Durch die Anstellung und die Wahl der Krümmung für die jeweils stationär angeordneten Leitschaufeln lässt sich die Drallströmung für das Fluid sinnfällig einstellen. Wie Fig. 5 zeigt, ist an der Oberseite der Endkappe 25 ein Haltebügel 87 umlegbar angebracht, der eine Handhabe für den Filterelementwechsel bildet.

## Patentansprüche

1. Filtervorrichtung für Fluide, insbesondere in Form eines Tankeinbau-Rücklauffilters, mit zumindest einem Filterelement (27), das in einem Gehäuse (3) aufnehmbar ist, das einen Fluideingang (17) für die Zufuhr von Unfiltrat zu einem inneren Hohlraum (31) des jeweiligen Filterelements (27) aufweist, der von einem vom Unfiltrat durchströmbaren Filtermedium (29) umgeben ist, das einen zylindrischen Hohlraum (31) umgrenzt, wobei zwischen dem Fluideingang (17) und dem inneren Hohlraum (31) des jeweiligen Filterelements (27) eine die Strömung des zum Filtermedium (29) gelangenden Unfiltrats ausrichtende Strömungsleiteinrichtung (13, 49, 77) vorgesehen ist, die Führungsmittel (49, 77) zur Erzeugung einer Drallströmung aufweist, die im Hohlraum (31) um die Zylinderachse rotiert, wobei die Strömungsleiteinrichtung stromaufwärts der drallerzeugenden Führungsmittel (49, 77) eine Einströmkammer (13) aufweist, in die das Unfiltrat mit von einer Anschlusseinrichtung (17) vorgegebener Einströmrichtung (41) eintritt und aus der das Unfiltrat mit gegenüber der Einströmrichtung (41) veränderter Strömungsrichtung (47) zu den drallerzeugenden Führungsmitteln (49, 77) gelangt, **dadurch gekennzeichnet, dass** sich innerhalb des Hohlraumes (31) des Filterelements (27) eine Magnetkerze oder Sensoren befinden.

2. Filtervorrichtung nach Anspruch 1, **dadurch gekennzeichnet, dass** die drallerzeugenden Führungsmittel als eine Funktionsstufe einen in der Einströmkammer (13) befindlichen, den Strömungsweg von dieser zu einer Öffnung (75) der zugeordneten Endkappe (25) des betreffenden Filterelements (27) bildenden Führungskörper (49) aufweisen, in den das Unfiltrat aus der Einströmkammer (13) über eine von der Anschlusseinrichtung (17) abgewandte Öffnung einströmbar ist und die innere Leitflächen (51) aufweist, die zur Drallerzeugung spiralig zur Achse verlaufen.

3. Filtervorrichtung nach Anspruch 1 oder 2, **dadurch gekennzeichnet, dass** die drallerzeugenden Führungsmittel als weitere Funktionsstufe leitschaufelartige Drallelemente (77) aufweisen, die sich an der zum Filterhohlraum (31) führenden Öffnung (75) der Endkappe (25) befinden.

4. Filtervorrichtung nach einem der vorstehenden Ansprüche, **dadurch gekennzeichnet, dass** die Einströmkammer (13) an der Oberseite eines beim Filtervorgang die Reinseite bildenden Fluidtanks (1) angeordnet ist, einen durch einen Tankwandabschnitt gebildeten Boden (11), in dem eine Einbauöffnung (9) für das in den Tank (1) ragende Filtergehäuse (3) vorhanden ist, sowie einen der Einbauöffnung (9) gegenüberliegenden, abnehmbaren Gehäusedeckel (19) aufweist.

5. Filtervorrichtung nach einem der Ansprüche 2 bis 4, **dadurch gekennzeichnet, dass** der die spiralig verlaufenden Leitflächen (51) aufweisende Führungskörper (49) sich von der Unterseite des Gehäusedeckels (19) bis zur Anlage an der Endkappe (25) des in Funktionsposition befindlichen Filterelements (27) erstreckt.

6. Filtervorrichtung nach einem der Ansprüche 2 bis 5, **dadurch gekennzeichnet, dass** der Führungskörper (49) am Gehäusedeckel (19) angebracht ist und einen koaxialen Durchgang aufweist, durch den sich ein am Gehäusedeckel (19) festgelegter Träger (65) einer Magnetkerze in den inneren Hohlraum (31) des betreffenden Filterelements (27) erstreckt.

7. Filtervorrichtung nach einem der Ansprüche 4 bis 6, **dadurch gekennzeichnet, dass** das Filtergehäuse (3) mit einem Befestigungsflansch (7) an der im Boden (11) der Einströmkammer (13) gebildeten Einbauöffnung (9) unter Bildung einer Abdichtung festgelegt ist, die die schmutzseitige Einströmkammer (13) vom reinseitigen Tank (1) trennt.

8. Filtervorrichtung nach Anspruch 7, **dadurch gekennzeichnet, dass** das Filtergehäuse (3) einen sich von seinem Befestigungsflansch (7) durch die Einströmkammer (13) zum Gehäusedeckel (19) erstreckenden Wandabschnitt (43) aufweist, der eine Prallwand bildet, die der an der Kammerwand befindlichen Anschlusseinrichtung (17) für das Unfiltrat gegenüberliegend angeordnet ist.

## Claims

1. Filter device for fluids, in particular in the form of a tank-integrated return filter (27) comprising at least one filter element (27) which can be received in a housing (3), comprising a fluid inlet (17) for supplying unfiltered medium to an inner cavity (31) of the respective filter element (27), said cavity being surrounded by a filter medium (29) through which unfiltered medium can flow, said filter medium enclosing a cylindrical cavity (31), a flow guide device (13, 49, 77) directing the flow of unfiltered medium passing into the filter medium (29) being provided between the fluid inlet (17) and the inner cavity (31) of the respective filter element (27), said flow guide device comprising guide means (49, 77) to generate a swirling flow which rotates around the cylinder axis in the cavity (31), said flow guide device comprising an inflow chamber (13) upstream of the guide means (49, 77) generating the swirling flow, the unfiltered medium entering said inflow chamber with an inflow direction (41) defined by a connection device (17) and passing from said inflow chamber to the guide means (49, 77) generating the swirling flow with a different flow direction (47) to the inflow direction (41), **characterised in that** a magnetic core or sensors are located inside the cavity (31) of the filter element (27).

2. Filter device according to claim 1, **characterised in that** the guide means generating the swirling flow comprise, as one functional stage, a guide body (49) located in the inflow chamber (13), forming the flow path from said chamber to an opening (75) in the assigned end cap (25) of the relevant filter element (27), the unfiltered medium being able to flow into said guide body from the inflow chamber (13) via an opening facing away from the connection device (17) and comprising inner guide surfaces (51) which run in a spiral manner with respect to the axis to generate the swirling flow.

3. Filter device according to either claim 1 or claim 2, **characterised in that**, as a further functional stage, the guide means generating the swirling flow comprise vane-like swirl elements (77) which are located at the opening (75) of the end cap (25) leading to the filter cavity (31).

4. Filter device according to any one of the preceding claims, **characterised in that** the inflow chamber (13) is arranged on the upper side of a fluid tank (1) forming the clean side in the filter process, and comprises a base (11) formed by a tank wall portion, in which base an insertion opening (9) for the filter housing (3) protruding into the tank (1) is provided, and a removable housing lid (19) opposite the insertion opening (9).

5. Filter device according to any one of claims 2 to 4, **characterised in that** the guide body (49) comprising guide surfaces (51) running in a spiral manner extends from the underside of the housing lid (19) until it comes into contact with the end cap (25) of the filter element (27) in operating position.

6. Filter device according to any one of claims 2 to 5, **characterised in that** the guide body (49) is attached to the housing lid (19) and comprises a coaxial passage, through which a support for a magnetic core (65), said support being fixed to the housing lid (19), passes into the inner cavity (31) of the relevant filter element (27).

7. Filter device according to any one of claims 4 to 6, **characterised in that** the filter housing (3) is fixed to the insertion opening (9) formed in the base (11) of the inflow chamber (13) with a mounting flange (7) to form a seal, which separates the inflow chamber (13) on the unfiltered side from the tank (1) on the clean side.

8. Filter device according to claim 7, **characterised in that** the filter housing (3) comprises a wall portion (43) extending from the mounting flange (7) of said filter housing through the inflow chamber (13) to the housing lid (19), said wall portion forming a baffle, which is arranged opposite the connection device (17) for the unfiltered medium located on the chamber wall.

## Revendications

1. Installation de filtration de fluide, notamment sous la forme d'un filtre d'incorporation à un réservoir, comprenant au moins un élément (27) de filtre pouvant être logé dans une enveloppe (3), qui a une entrée (17) de fluide pour l'envoi de non filtrat à une cavité (31) intérieure de l'élément (27) de filtre entouré d'un milieu (29) filtrant pouvant être traversé par le non filtrat et délimitant une cavité (31) cylindrique, dans laquelle entre l'entrée (17) de fluide et la cavité (31) intérieure de l'élément (27) de filtre respectif est prévu un dispositif (13, 49, 77) de conduite d'écoulement dirigeant l'écoulement du non filtrat arrivant au milieu (29) filtrant et ayant des moyens (49, 77) de conduite pour produire un écoulement tourbillonnaire qui tourne dans la cavité (31) autour de l'axe du cylindre, le dispositif de conduite d'écoulement ayant, en amont des moyens (49, 77) de conduite produisant un tourbillon, une chambre (13) d'afflux dans laquelle le non filtrat entre en ayant la direction (41) d'afflux prescrite par un dispositif (17) de raccordement et dont le non filtrat parvient, en ayant une direction (47) découlement modifié par rapport à la direction (41) d'afflux, aux moyens (49, 77) de conduite produisant un tourbillon, **caractérisé en ce qu'**une bougie magnétique ou des capteurs se trouvent à l'intérieur de la cavité (31) de l'élément (27) de filtre.

2. Installation de filtration suivant la revendication 1, **caractérisée en ce que** les moyens de conduite produisant un tourbillon ont comme étage fonctionnel un corps (49) de conduite qui se trouve dans la chambre (13) d'afflux, qui forme le trajet d'écoulement de celle-ci à une ouverture (75) de la coiffe (25) d'extrémité associée de l'élément (27) de filtre concerné, dans lequel le non filtrat peut de la chambre (13) d'afflux entrer par une ouverture loin du dispositif (17) de raccordement et qui a les surfaces (51) de conduite intérieure qui, pour la production d'un tourbillon, s'étendent en spirale par rapport à l'axe.

3. Installation de filtration suivant l'une des revendications 1 ou 2, **caractérisée en ce que** les moyens de conduite produisant un tourbillon ont comme autre étage fonctionnel des éléments (77) de tourbillonnement de type à palette directrice, qui se trouvent sur l'ouverture (75), menant à la cavité (31) du filtre, de la coiffe (25) d'extrémité.

4. Installation de filtration suivant l'une des revendications précédentes, **caractérisée en ce que** la chambre (13) d'afflux est disposée du côté supérieur d'un réservoir (1) à fluide formant le côté propre lors de l'opération de filtration, a un fond (11) qui est formé par une partie de paroi du réservoir et dans lequel il y a une ouverture (9) de montage de l'enveloppe (3) de filtre pénétrant dans le réservoir (1) ainsi qu'un couvercle (19) d'enveloppe opposé à l'ouverture (9) de montage et pouvant être retiré.

5. Installation de filtration suivant l'une des revendications 2 à 4, **caractérisée en ce que** le corps (49) de conduite, ayant des surfaces (51) de conduite s'étendant en spirale, s'étend du côté inférieur du couvercle (19) de l'enveloppe jusqu'à s'appliquer à la coiffe (25) d'extrémité de l'élément (27) de filtre se trouvant en position de fonctionnement.

6. Installation de filtration suivant l'une des revendications 2 à 5, **caractérisée en ce que** le corps (49) de conduite est mis sur le couvercle (19) de l'enveloppe et a un passage coaxial dans lequel s'étend un support (65), fixé au couvercle (19) de l'enveloppe, d'une bougie magnétique dans la cavité (31) intérieure de l'élément (27) de filtre concerné.

7. Installation de filtration suivant l'une des revendications 4 à 6, **caractérisée en ce que** l'enveloppe (3) du filtre est fixée par une bride (7) de fixation à l'ouverture (9) de montage formée au fond (11) de la chambre (13) d'afflux, en formant une étanchéité qui sépare la chambre (13) d'afflux du côté sale du réservoir (1) du côté propre.

8. Installation de filtration suivant la revendication 7, **caractérisée en ce que** l'enveloppe (3) du filtre a une partie (43) de paroi, qui s'étend de sa bride (7) de fixation au couvercle (9) de l'enveloppe en passant par la chambre (13) d'afflux et qui forme une paroi de rebondissement, qui est disposée à l'opposé du dispositif (7) de raccordement pour le non filtrat se trouvant sur la paroi de la chambre.
